# EUROPÄISCHE PATENTANMELDUNG

(11) **EP 1 306 125 A2**
(43) Veröffentlichungstag der Anmeldung: **02.05.2003**
(21) Anmeldenummer: 02018988.2
(22) Anmeldetag: 27.08.2002
(51) Int. Cl.: B01J 2/16

(54) **Verfahren zur Herstellung von Alkalialkoholat- und Erdalkalialkoholat-Granulaten**

(30) Priorität: 15.10.2001 DE 10150326
(71) Anmelder: Degussa AG, 40474 Düsseldorf (DE)
(72) Erfinder: Harthun, Andreas, Dr., 63776 Mömbris (DE); Lüthi, Joachim, 53639 Königswinter (DE); Schulze, Stefan, Dr., 63538 Grosskrotzenburg (DE); Alt, Christian, 63571 Gelnhausen (DE); Gölz, Andreas, 63517 Rodenbach (DE)

(57) **Zusammenfassung**

Die Erfindung betrifft Verfahren zur Herstellung von Alkalialkoholat- und Erdalkalialkoholat-Granulaten von aliphatischen, gesättigten oder ungesättigten, unverzweigten oder verzweigten Alkoholen mit 1 bis 12, insbesondere 1 bis 6 Kohlenstoffatomen. Ein bevorzugtes Verfahren zur Herstellung der genannten Alkoholate verwendet die Wirbelschicht-Sprühgranulation.

## Beschreibung

Die Erfindung betrifft Verfahren zur Herstellung von Alkalialkoholat- und Erdalkalialkoholat-Granulaten von aliphatischen, gesättigten oder ungesättigten, unverzweigten oder verzweigten Alkoholen mit 1 bis 12, insbesondere 1 bis 6 Kohlenstoffatomen. Ein bevorzugtes Verfahren zur Herstellung der genannten Alkoholate verwendet die Wirbelschicht-Sprühgranulation.

Die Herstellung von granulösem Natriumbenzoat, das aus Natriumalkoholatlösung und Phenol in Toluol gewonnen wird, ist bekannt (US 3 907 877).

Alkalialkoholat- und Erdalkalialkoholat-Feststoffe ausgehend von aliphatischen Alkoholen sind bisher jedoch ausschließlich in Pulverform zugänglich. Aus dieser Pulverform resultieren beim Umgang mit diesen Alkoholaten erhebliche Gefahrenpotentiale, da sie in dieser Pulverform ätzend, an der Atmosphäre leicht entzündlich und chemisch hochreaktiv sind. Dieses stellt hohe verfahrenstechnische und sicherheitstechnische Anforderungen an den Umgang mit den betreffenden Stoffen.

Es bestand daher die Aufgabe, Verfahren bereitzustellen, die es erlauben, Alkali- und Erdalkali-Alkoholate von aliphatischen Alkoholen mit 1 bis 12, insbesondere 1 bis 6, Kohlenstoffatomen in Granulatform bereitzustellen, um die genannten Nachteile der pulverförmigen Ausführungsformen zu vermeiden.

Es wurde nun gefunden, dass sich unter speziellen Bedingungen granulatförmige Alkaliund/oder Erdalkali-Alkoholate herstellen lassen.

Gegenstand der Erfindung sind Verfahren zur Herstellung von Alkalialkoholat- und Erdalkalialkoholat-Granulaten, wobei als Verfahren vorzugsweise die Wirbelschicht-Sprühgranulation zum Einsatz kommt.

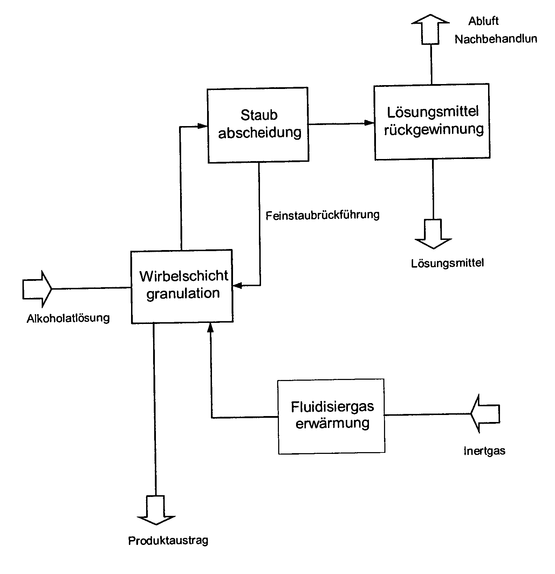

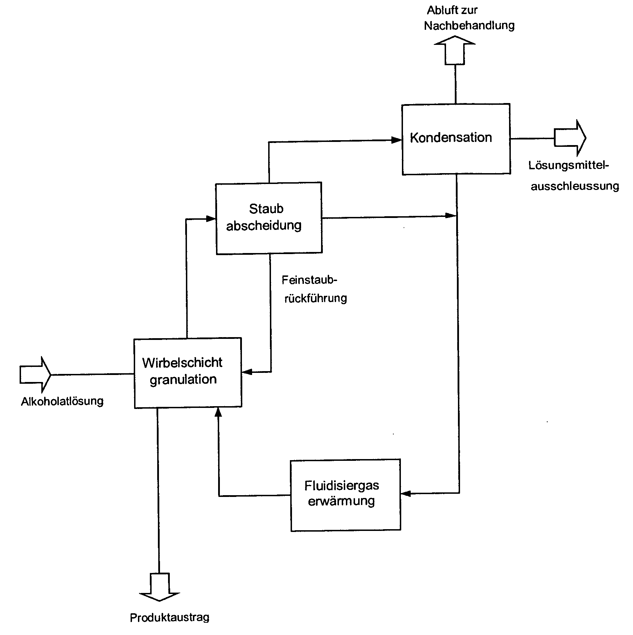

Typischerweise werden bei der Wirbelschicht-Sprühgranulation Lösungen oder Dispersionen in eine Wirbelschicht versprüht. Die enthaltenen Flüssigkeitsanteile werden durch einen Wärmeträgergasstrom verdampft. Die Feststoffanteile haften in der Wirbelschicht an bereits vorgelegtem Material an und verursachen ein Wachstum des Granulatdurchmessers. Abhängig von dem zu granulierenden Produkt wird die Partikelgröße des Granulates durch die Wahl der spezifischen Prozessparameter kontrolliert und reproduziert. Das Wärmeträgermedium kann hierbei ein erhitztes Inertgas oder aber ausreichend heißer Dampf sein. Der Wärmeträger wird entweder in einfachem Durchtritt (Abbildung 1) oder bis hin zur vollständigen Kreisgasführung durch die Granulationswirbelschicht geleitet (Abbildung 2). Möglichst vollständige Kreisgasrührung mit Ausschleusung der überschüssigen Lösemittel und Inertgase ist unter wirtschaftlichen Aspekten anzustreben.

In der Wirbelschicht verdampfte Flüssigkeitsbestandteile der eingesetzten Lösungen oder Dispersionen können kondensiert und zurückgewonnen werden. Diese Alternative ist unter umweltrelevanten und wirtschaftlichen Aspekten vorzugsweise zu wählen.

Das Versprühen der Lösung oder Dispersion erfolgt mit Düsen, durch die gleichzeitig ein oder mehrere Stoffe durchgeleitet werden. Im Fall einer Einstoffdüse wird lediglich die unter Druck stehende Lösung oder Dispersion des zu granulierenden Stoffes versprüht. Werden hingegen Mehrstorfdüsen, vorzugsweise Zwei-, Drei- oder Vierstoffdüsen, eingesetzt, so werden zusätzlich zu der Lösung oder Dispersion Zerstäubergas(e) und Düsenreinigungsgas(e) versprüht. Die technische Ausführung der Düsen oder die Eindüsrichtung in den Wirbelschichtraum kann prinzipiell frei gewählt werden und ist produktabhängig. Die Anzahl der Stoffe, die maximal durch eine Düse geleitet werden kann, soll keinesfalls limitierend für die Herstellung der erfindungsgemäßen Alkoholat-Granulate sein.

Ein Granulatteilstrom wird kontinuierlich oder diskontinuierlich aus der Granulationswirbelschicht entnommen, gegebenenfalls gekühlt und nach Bedarf unter Schutzgasatmosphäre gelagert oder abgefüllt. Die Granulation kann auch diskontinuierlich durchgeführt werden, was aber unter wirtschaftlichen Aspekten nicht zu favorisieren ist.
Das Fluidisiergas führt nach der Wirbelschicht Feinstaubanteile mit sich, die in geeigneter Weise abgeschieden werden, was beispielsweise durch Filter oder Zyklone geschehen kann. Die weitgehende Staubabscheidung kann oberhalb der Wirbelschicht in dem Wirbelschicht-Sprühgranulator selbst oder außerhalb des Sprühgranulators in einem geeigneten externen Abscheider erfolgen.

Werden für diese Aufgabenstellung Staubfilter eingesetzt, so können für die Abreinigung der Filterelemente Inertgase wie insbesondere Stickstoff oder das Kreisgas selbst verwendet werden. Feinstäube werden günstigerweise in die Wirbelschicht zurückgeführt.

Das Sprühgranulationsverfahren zur Herstellung der Alkali- und Erdalkali-Alkohol-Granulate lässt sich grundsätzlich bei Überdruck, Normaldruck oder Unterdruck realisieren. Ein günstiger Verfahrensdruckbereich ist dann gegeben, wenn mit dem Fluidisiergas bei maximal zulässiger Systemtemperatur spezifikationsgerechtes Granulat bei maximaler Kapazität erzeugt wird.
Die Wirbelschichttemperatur wird vorzugsweise variabel durch den gewählten Verfahrensdruck eingestellt. Vorzugsweise wird ein geringer Verfahrensüberdruck gegenüber der Atmosphäre eingestellt.

Die Fluidisiergaserhitzer können elektrisch, mit Dampf oder mit Wärmeträgermedien betrieben werden. Zum wirtschaftlichen Betreiben der Wirbelschicht-Sprühgranulationsanlage kann ein Hintereinanderschalten von zuvor benannten Gaserhitzertypen zweckmäßig sein.

Bei dem erfindungsgemäß angewandten Verfahren zur Granulation der Alkali- und Erdalkali-Alkoholate werden vorzugsweise die alkoholischen Lösungen der Alkoholate eingesetzt. Prinzipiell können aber auch Dispersionen der Alkoholate in alternativen Lösemitteln oder nicht alkoholische Alkoholatlösungen eingesetzt werden. Als ein keinesfalls einschränkendes Beispiel sei die Lösung von Kalium-tert.-butanolat in Tetrahydrofuran genannt.

Als Gas für die Fluidisierung kann ein Inertgas, vorzugsweise aber auch das verdampfte Lösemittel, in dem das Alkoholat gelöst oder dispergiert ist, eingesetzt werden.

Die Wirbelschichttemperatur wird vorzugsweise durch ein Inertgas oder durch überhitzte Lösemitteldämpfe oder durch eine Mischung aus beiden eingestellt.

Die Temperatur des Bettes muss so gewählt werden, dass sie unterhalb der Schmelztemperatur des betreffenden Alkoholats liegt.

Die Wirbelschichttemperatur des Bettes wird vorzugsweise derart gewählt, dass der Alkoholatgehalt des Granulates größer ist als der Alkoholatgehalt der eingesetzten Lösung oder Dispersion.

Der Alkoholgehalt der Lösung oder Dispersion beträgt vor der Granulierung im Allgemeinen weniger als 90 %, vorzugsweise weniger als 50 %, insbesondere 20 bis 40 %

Der Alkoholatgehalt des Granulates beträgt 50 - 100 Gew.-%, vorzugsweise 90 - 99 Gew.-%, insbesondere > 98 Gew.-%. Die Trocknung kann direkt in der Granulationswirbelschicht oder in einem nachgeschalteten Trockner erfolgen. Die nachgeschaltete Trocknung ist insbesondere dann vorteilhaft anzuwenden, wenn der Alkoholatgehalt der in der Granulierung anfallenden Granulate < 98 %, insbesondere < 90 % ist.

Das durch die Wirbelschicht geleitete Fluidisierungsgas kann zu 0 % bis 100 % unter Wärmezufuhr wieder der Wirbelschicht zugeführt werden.

### Beispiele

Die nachfolgenden Beispiele zur Herstellung von Natriummethanolat-, Natriumethanolat-, Kaliummethanolat- und Kaliumethanolat-Granulat haben lediglich beispielhaften Charakter und sollen keinesfalls die Anwendbarkeit des Wirbelschicht-Sprühgranulationsverfahrens auf diese Alkoholate beschränken. Ferner sind die Verfahrensparameter, abhängig von den Heizleistungs- und Druckbedingungen, in weiten Bereichen variierbar. Die angegebenen Temperaturen lassen sich naturgemäß absenken, wenn der Verfahrensdruck reduziert wird oder erhöhen, wenn der Verfahrensdruck erhöht wird. Aus Gründen der Anlagensicherheit kann die Einstellung eines Systemdruckes oberhalb des Atmosphärendruckes sinnvoll sein.

### Beispiel 1:

Herstellung von Natriummethanolatgranulat (NM) mit einer Zweistoffdüse:
In eine Wirbelschicht bestehend aus Natriummethanolatfeststoff wird über eine Zweistoffdüse eine methanolische Natriummethanolatlösung (30 Gew.-% Alkoholatanteil) versprüht. Als Treibgas wird Stickstoff verwendet. Die Wirbelschicht wird auf 70 °C - 95 °C temperiert, indem ca. 150 °C - 250 °C heißer Stickstoff durch die Wirbelschicht geleitet wird. Das Erhitzen des Stickstoffs erfolgt mit einem elektrischen Gaserhitzer. Aus der Wirbelschicht wird kontinuierlich Natriummethanolatgranulat entnommen (NM-Gehalt > 98 Gew.-%). Der Betriebsüberdruck beträgt 10 mbar - 100 mbar. Das überschüssige Methanol sowie der überschüssige Stickstoff wird durch ein Kondensationssystem geleitet, wobei Methanol kondensiert und zurückgewonnen wird.

### Beispiel 2:

Herstellung von Natriummethanolatgranulat (NM) mit einer Einstoffdüse:
In eine Wirbelschicht bestehend aus Natriummethanolatfeststoff wird über eine Einstoffdüse eine methanolische Natriummethanolatlösung (30 Gew.-% Alkoholatanteil) versprüht. Die Wirbelschicht wird auf 70 °C - 135 °C temperiert, indem ca. 250 °C - 350 °C heißer Methanoldampf durch die Wirbelschicht geleitet wird. Das Erhitzen des Fluidisiergases erfolgt mit einem elektrischen Gaserhitzer. Aus der Wirbelschicht wird kontinuierlich Natriummethanolatgranulat entnommen (NM-Gehalt > 98 Gew.-%). Der Betriebsüberdruck beträgt 10 mbar - 100 mbar. Das überschüssige Methanol wird durch ein Kondensationssystem geleitet, wobei Methanol kondensiert und zurückgewonnen wird.

### Beispiel 3:

Herstellung von Natriumethanolatgranulat (NE) mit einer Einstoffdüse:
In eine Wirbelschicht bestehend aus Natriumethanolatfeststoff wird über eine Einstoffdüse eine ethanolische Natriumethanolatlösung (21 Gew.-% Alkoholatanteil) versprüht. Die Wirbelschicht wird auf 70 °C - 135 °C temperiert, indem ca. 250 °C - 350 °C heißer Ethanoldampf durch die Wirbelschicht geleitet wird. Das Erhitzen des Fluidisiergases erfolgt mit einem elektrischen Gaserhitzer. Aus der Wirbelschicht wird kontinuierlich Natriumethanolatgranulat entnommen (NE-Gehalt > 98 Gew.-%). Der Betriebsüberdruck beträgt 10 mbar - 100 mbar. Das überschüssige Ethanol wird durch ein Kondensationssystem geleitet, wobei Ethanol kondensiert und zurückgewonnen wird.

### Beispiel 4:

Herstellung von Kaliummethanolatgranulat (KM) mit einer Einstoffdüse:
In eine Wirbelschicht bestehend aus Kaliummethanolatfeststoff wird über eine Einstoffdüse eine methanolische Kaliummethanolatlösung (32 Gew.-% Alkoholatanteil) versprüht. Die Wirbelschicht wird auf 150 °C - 250 °C temperiert, indem ca. 300 °C - 350 °C heißer Methanoldampf durch die Wirbelschicht geleitet wird. Das Erhitzen des Fluidisiergases erfolgt mit einem elektrischen Gaserhitzer. Aus der Wirbelschicht wird kontinuierlich Kaliummethanolatgranulat entnommen (KM-Gehalt > 98 Gew.-%). Der Betriebsüberdruck beträgt 10 mbar - 100 mbar. Das überschüssige Methanol wird durch ein Kondensationssystem geleitet, wobei Methanol kondensiert und zurückgewonnen wird.

### Beispiel 5:

Herstellung von Kaliumethanolatgranulat mit einer Einstoffdüse:
In eine Wirbelschicht bestehend aus Kaliumethanolatfeststoff wird über eine Einstoffdüse eine ethanolische Kaliumethanolatlösung (24 Gew.-% Alkoholatanteil) versprüht. Die Wirbelschicht wird auf 150 °C - 250 °C temperiert, indem ca. 300 °C - 350 °C heißer Ethanoldampf durch die Wirbelschicht geleitet wird. Das Erhitzen des Fluidisiergases erfolgt mit einem elektrischen Gaserhitzer. Aus der Wirbelschicht wird kontinuierlich Kaliumethanolatgranulat entnommen (Gehalt > 98 Gew.-%). Der Betriebsüberdruck beträgt 10 mbar - 100 mbar. Das überschüssige Ethanol wird durch ein Kondensationssystem geleitet, wobei Ethanol kondensiert und zurückgewonnen wird.

## Patentansprüche

1. Verfahren zur Herstellung von Alkali- oder Erdalkalialkoholat-Granulaten.

2. Verfahren nach Anspruch 1,
**dadurch gekennzeichnet, dass**
eine Wirbelschicht-Sprühgranulation verwendet wird.

3. Verfahren nach Anspruch 2,
**dadurch gekennzeichnet, dass**
die Wirbelschichttemperatur variabel durch den gewählten Verfahrensdruck eingestellt wird.

4. Verfahren nach Anspruch 3,
**dadurch gekennzeichnet, dass**
ein geringer Verfahrensüberduck gegenüber der Atmosphäre eingestellt wird.

5. Verfahren nach einem der vorhergehenden Ansprüche,
**dadurch gekennzeichnet, dass**
die Wirbelschichttemperatur derart gewählt wird, dass der Alkoholatgehalt des Granulates größer ist als der Alkoholatgehalt der eingesetzten Lösung oder Dispersion.

6. Verfahren nach Anspruch 5,
**dadurch gekennzeichnet, dass**
der Alkoholatgehalt des Granulates > 98 Gew.-% beträgt, wobei das Alkoholat direkt in der Granulationswirbelschicht getrocknet wird.

7. Verfahren nach einem der vorhergehenden Ansprüche,
**dadurch gekennzeichnet, dass** der Alkoholatgehalt des Granulates, das aus der Wirbelschicht erhalten wird, < 98 Gew.-% ist und eine der Granulation nachgeschaltete Trocknung des Alkoholates durchgeführt wird.

8. Verfahren nach einem der vorhergehenden Ansprüche,
**dadurch gekennzeichnet, dass**
die Wirbelschichttemperatur durch ein Inertgas oder durch überhitzte Lösemitteldämpfe oder durch eine Mischung aus beiden eingestellt wird.

9. Verfahren nach Anspruch 8,
**dadurch gekennzeichnet, dass**
dasjenige Lösemittel als Fluidisiergas eingesetzt wird, in dem das Alkoholat gelöst oder dispergiert ist.

10. Verfahren nach einem der vorhergehenden Ansprüche,
**dadurch gekennzeichnet, dass**
das durch die Wirbelschicht geleitete Fluidisiergas zu 0 % - 100 % unter Wärmezufuhr wieder der Wirbelschicht zugeführt wird.
